# EUROPÄISCHE PATENTSCHRIFT

(11) **EP 3 279 534 B1**
(45) Veröffentlichungstag und Bekanntmachung des Hinweises auf die Patenterteilung: **29.01.2020**
(21) Anmeldenummer: 17020207.1
(22) Anmeldetag: 12.05.2017
(51) Int. Cl.: F16K 31/04, F01P 7/00, G05G 1/00

(54) **DREHREGLER MIT MITBEWEGBAREM KRAFTSPEICHER**
CONTROL KNOB WITH ENERGY ACCUMULATOR MOVED AT THE SAME TIME
BOUTON ROTATIF COMPRENANT UN ACCUMULATEUR DE FORCE MOBILE

(30) Priorität: 04.08.2016 DE 102016114492
(43) Veröffentlichungstag der Anmeldung: 07.02.2018
(73) Patentinhaber: Dr. Ing. h.c. F. Porsche AG, 70435 Stuttgart (DE)
(72) Erfinder: Nonnenmann, Jörg, 75382 Althengstett (DE); Eberle, Wolfgang, 71297 Mönsheim (DE); Geffert, Thomas, 71691 Freiberg am Neckar (DE)

(56) Entgegenhaltungen:
- DE-A1- 10 319 882
- DE-A1-102006 050 217
- DE-A1-102013 223 907
- DE-B3-102014 204 485
- US-A1- 2014 097 366

## Beschreibung

Die vorliegende Erfindung betrifft einen Regler und ein Verfahren zum Betreiben eines elektronisch gesteuerten Reglers, der mittels einer entriegelbaren Spiralfeder, welche im gespannten Zustand mitgeführt wird, über eine Fail-Safe-Funktion verfügt.

Elektronisch gesteuerte Drehregler werden bspw. zu einer Regelung eines Kühlkreislaufs in einem Fahrzeugmotor eingesetzt. Der Drehregler kann dabei einen Drehschieber umfassen, der einerseits über eine Achse mit einem Ventil verbunden sein kann, welches einen Kühlmitteldurchfluss steuert, oder aber der andererseits auch den Kühlmitteldurchfluss direkt beeinflussen kann. Durch eine Steuerung des Kühlmitteldurchflusses wird der Fahrzeugmotor auf einer gewünschten Temperatur gehalten. In jedem Fall ist aber bei einem Auftreten einer Störung des Drehreglers eine Überhitzung des Fahrzeugmotors durch eine Unterbrechung des Durchflusses an Kühlmittel auszuschließen. Der Drehregler muss daher über eine sogenannte Fail-Safe-Funktion verfügen, die gewährleistet, dass der Drehschieber im Störfall eine Sicherheitsstellung einnimmt und den Kühlmitteldurchfluss gewährleistet. Hierzu sind aus dem Stand der Technik die folgenden Lösungen bekannt.

In der Druckschrift DE 102 43 778 A1 oder US2014/0097366 A1 wird eine elektrische Stelleinrichtung für ein Ventil eines Motorkühlkreislaufs eines Fahrzeugs beschrieben, wobei ein Drehschieber mit einer Feder beaufschlagt ist. Dabei ist eine Federkraft nur in einem ersten Schiebebereich des Drehschiebers wirksam, so dass dieser in einem zweiten Schiebebereich ohne Gegenkraft durch die Feder bewegt werden kann.

In der Druckschrift DE 10 2008 030 769 B4 wird ein Drehschieber mit mindestens einem Rückstellelement beschrieben, wobei das Rückstellelement gegen eine Feder verdrehbar und über eine Arretiervorrichtung haltbar ist. Nach Lösen der Arretiervorrichtung ist ein Mitnahmemittel zum Verdrehen des Drehschiebers durch das Rückstellelement vorgesehen.

In der Druckschrift DE 10 2012 208 652 B3 wird ein Ventil zum Einsatz in Kühlmittelströmen beschrieben, wobei eine Fail-Safe-Scheibe mit einer Feder vorgesehen ist. Dabei ist die Fail-Safe-Scheibe durch Vorspannung der Feder in einem Ventilkörper arretierbar, wobei der Ventilkörper im Normalbetrieb unabhängig von Federkräften arbeitet. Im Defektfall wird die Verbindung zwischen der Fail-Safe-Scheibe und dem Ventilgehäuse gelöst und der Ventilkörper durch die Vorspannung der Feder in eine offene Position verdreht.

In der Druckschrift EP 1 085 181 A2 wird ein elektrisches Ventil für einen Kühlkreislauf eines Motors beschrieben, wobei ein Elektromotor mit einem Rotor und einem Stator zum Verdrehen des Ventils vorgesehen ist. Weiterhin ist eine Feder zum Vorspannen des Rotors und damit des Ventils gegenüber einer Offen-Stellung vorgesehen.

In der Druckschrift EP 1 035 307 A1 wird ein Ventil für einen Kühlkreislauf beschrieben, wobei eine Spiralfeder um die Ventilachse zwischen zwei Zapfen vorgesehen ist. Im Defektfall wird einer der Zapfen zerstört und die Feder sorgt durch die Rückstellkraft für eine Verdrehung des Ventils in eine Offen-Position.

Die aus dem Stand der Technik bekannten Lösungen haben unter anderem den Nachteil, dass im Drehregler hohe Reibungsverluste auftreten, bei Auslösung der Fail-Safe-Funktion eine starke Materialbeanspruchung entsteht, bzw. die bislang umgesetzten Konzepte einen hohen Gewichts- und/oder Kostennachteil mit sich bringen. Um in diese Nachteile der bisherigen Lösungen einzuführen, und später die Vorteile des erfindungsgemäßen Verfahrens aufzeigen zu können, werden im Folgenden exemplarisch einige aus dem Stand der Technik bekannte Umsetzungen anhand linearer Ersatzschaubilder verdeutlicht.

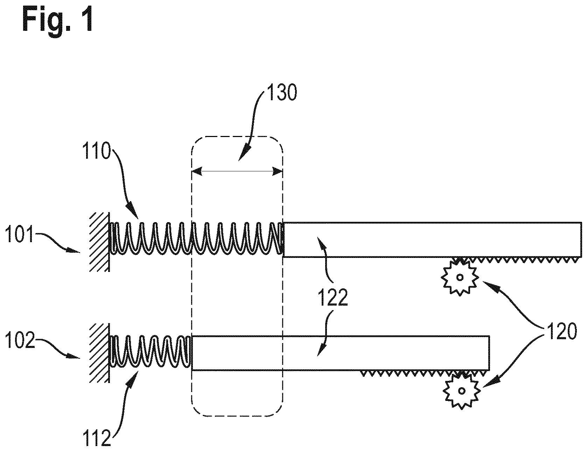

So ist ein Lösungsansatz bekannt, der die Fail-Safe-Funktion mittels einer einfachen Rückstellfeder am Drehschieber umsetzt. Dieser wird als lineares Ersatzschaubild in Figur 1 dargestellt. Der Nachteil dieses Verfahrens ist, dass im Störfall ein von der Rückstellfeder zu bewirkendes Kraftmoment groß genug sein muss, um den Drehregler mit samt einem Antrieb am Drehschieber in eine Sicherheitsstellung bringen zu können. Da im Regelfall ständig gegen dieses hohe Kraftmoment der Rückstellfeder anzuarbeiten ist, muss ein den Antrieb am Drehschieber bewirkender Elektromotor sehr groß dimensioniert werden. Außerdem erfordert dies eine dauerhafte Bestromung des Elektromotors.

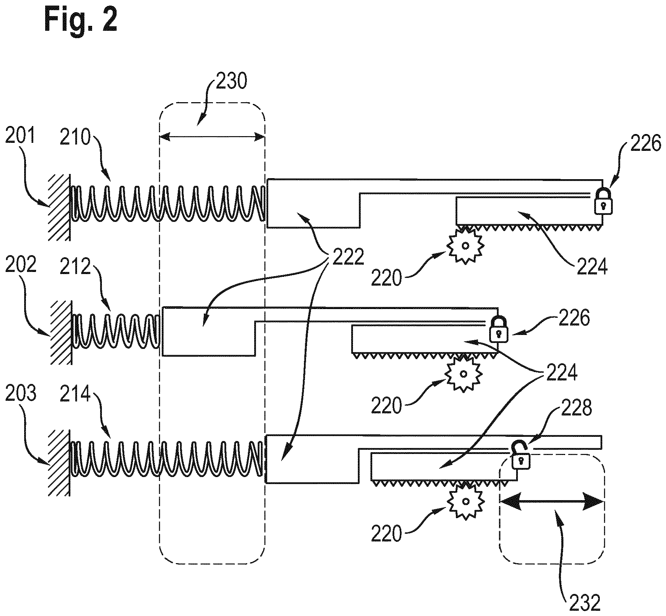

Um im Störfall den Drehschieber gelöst von seinem Antrieb in die Sicherheitsstellung zu bringen, wurde das in Figur 2 als lineares Ersatzschaubild gezeigte Konzept entwickelt. Der Elektromotor verschiebt den Drehschieber über eine an diesen angekoppelte Verstelleinheit. Im Störfall wird diese Kopplung gelöst und die weiterhin am Drehschieber befestigte Rückstellfeder verschiebt diesen in die Sicherheitsstellung. Da dabei nicht ein Trägheitsmoment und Reibmoment des Antriebs samt Elektromotor überwunden werden müssen, kann das Kraftmoment der Rückstellfeder geringer als in dem der Figur 1 zugeordneten Verfahren gestaltet werden. Jedoch muss wiederum ständig gegen die Rückstellfeder angearbeitet und daher der Elektromotor dauerhaft bestromt werden.

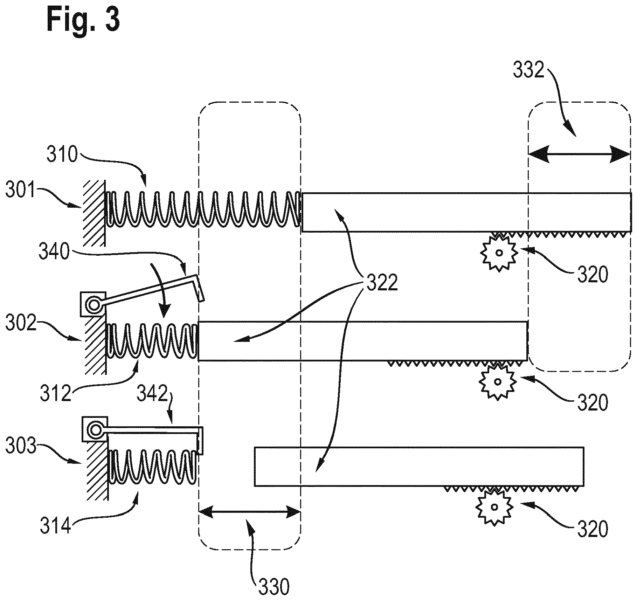

Um die dauerhafte Beaufschlagung durch die Rückstellfeder zu vermeiden, wurde das in Figur 3 als lineares Ersatzschaubild gezeigte Verfahren entwickelt. Hierbei wird die Rückstellfeder zunächst bei einem Initialisierungsvorgang vorgespannt und verrastet. Im Störfall kann die Rückstellfeder entriegelt werden und auf den Drehschieber dergestalt einwirken, dass dieser in die Sicherheitsstellung verschoben wird. Nachteilig bei diesem Verfahren ist, dass beim Auslösen der Rückstellfeder im Störfall ein sehr hoher Rückstellimpuls auf den beaufschlagten Drehschieber samt verbundenem Antrieb einwirkt. Ein denkbares abfedernd wirkendes Dämpferelement führt zu einem höheren Gewicht und/oder Kostenfaktor. Der Elektromotor muss zwar im Regelfall nicht gegen die Rückstellfeder anarbeiten und kann daher geringer bestromt werden, er muss jedoch ausreichend groß dimensioniert sein, um beim Initialisierungsvorgang das Kraftmoment der Rückstellfeder und das Reibmoment des Drehschiebers zu überwinden. Auch dies stellt einen Gewichts- und Kostenfaktor da. Schließlich kann bei diesem Konzept nicht auf eine einfache Umsetzung des Regelfalls durch einen selbsthemmenden, beispielsweise durch einen Schneckentrieb realisierten Antrieb am Drehschieber zurückgegriffen werden, da ein solcher Antrieb dem hohen Rückstellimpuls entgegenwirken würde.

Es war demnach eine Aufgabe der vorliegenden Erfindung, eine Möglichkeit vorzusehen, bei Auslösung einer Fail-Safe-Funktion bei einem Regler, hohe Reibungsverluste und eine starke Materialbeanspruchung zu vermeiden.

Vor diesem Hintergrund wird ein Regler, ein Verfahren und ein Ventil mit den Merkmalen der unabhängigen Patentansprüche vorgestellt. Ausgestaltungen der Erfindung sind den entsprechenden Unteransprüchen und der nachfolgenden Beschreibung zu entnehmen.

Der erfindungsgemäße Regler umfasst mindestens eine Regeleinheit, eine Verstelleinheit, eine Antriebseinheit, die dazu konfiguriert ist, die Verstelleinheit zu verstellen, und einen ver- und entriegelbaren Kraftspeicher. Die Regeleinheit und die Verstelleinheit stehen über den Kraftspeicher in mittelbarem Kontakt miteinander. Die Regeleinheit ist durch die Verstelleinheit bei verriegeltem, geladenem Kraftspeicher unter Mitführung des Kraftspeichers innerhalb eines Verstellbereichs verschiebbar. Bei einer Entriegelung des geladenen Kraftspeichers wird durch eine dabei zumindest teilweise erfolgende Entladung des Kraftspeichers die Regeleinheit unabhängig von der Verstelleinheit automatisch in eine Sicherheitsstellung gebracht.

In möglicher Ausgestaltung ist der Kraftspeicher eine Feder, insbesondere eine Spiralfeder. Ein geladener Kraftspeicher entspricht dabei dann einer vorgespannten Feder bzw. einer vorgespannten Spiralfeder. Im Rahmen der vorliegenden Offenbarung werden die Begriffe "Feder" und "Rückstellfeder" synonym zueinander verwendet. Eine Spiralfeder ist eine besondere Ausprägung einer Feder bzw. einer Rückstellfeder.

Die Begriffe "Kopplung" und "Kupplung" werden im Folgenden ebenfalls synonym zueinander verwendet.

In weiterer Ausgestaltung ist der erfindungsgemäße Regler als Drehregler ausgeführt, wobei die Regeleinheit als Drehschieber realisiert ist.

In einer weiteren Ausführungsform des erfindungsgemäßen Reglers ist die Antriebseinheit ferner dazu konfiguriert, den Kraftspeicher aufzuladen, d.h. im Falle einer Feder, diese entsprechend vorzuspannen.

In möglicher Ausgestaltung ist die Antriebseinheit ein selbsthemmender Antrieb, insbesondere ein Schneckentrieb.

In weiterer Ausgestaltung umfasst die Antriebseinheit einen Elektromotor.

Dabei ist eine Ver- und Entriegelung des Kraftspeichers durch eine elektromagnetische Kopplung zwischen Regeleinheit und Verstelleinheit zu realisieren.

Der erfindungsgemäße Regler umfasst in weiterer Ausgestaltung einen Ver- und Entriegelungsmechanismus, der dazu konfiguriert ist, den Kraftspeicher bedarfsweise zu verriegeln bzw. insbesondere in einem Fehlerfall automatisch zu entriegeln. Dieser Ver- und Entriegelungsmechanismus ist in Ausgestaltung durch eine elektromagnetische Kopplung zwischen Regeleinheit und Verstelleinheit realisiert.

Durch die erfindungsgemäß vorgesehene Kopplung von Regeleinheit, Kraftspeicher und Verstelleinheit kann eine zum Laden des Kraftspeichers aufzubringende Kraft bzw. im Falle, dass der Kraftspeicher durch eine Feder, insbesondere eine Spiralfeder realisiert ist, ein zum Vorspannen der Feder aufzubringendes Drehmoment gegenüber den einleitend genannten Vorschlägen aus dem Stand der Technik um nahezu 50% reduziert werden. Dies wird erreicht, indem der für die Fail-Safe-Funktion notwendige Kraftspeicher in einem ersten Schritt geladen wird, ohne die Regeleinheit zu bewegen. Im Falle, dass der Kraftspeicher durch eine Feder, insbesondere eine Rückstellfeder realisiert ist, wird diese in dem ersten Schritt vorgespannt, ohne die Regeleinheit, bspw. den Drehschieber zu bewegen. Somit muss das Drehmoment der Feder und das Reibmoment des Drehschiebers nicht zeitgleich überwunden werden. Ist die Rückstellfeder ausreichend vorgespannt, d.h. ist der Kraftspeicher ausreichend geladen, werden Drehschieber und Verstelleinheit, d.h. Regeleinheit und Verstelleinheit form- und/oder kraftschlüssig miteinander verbunden. Der Kraftschluss kann dabei über eine elektromagnetische Kopplung erfolgen. Der Drehschieber, d.h. die Regeleinheit kann in diesem Zustand in einem gesamten vorgesehenen Verstellbereich bewegt werden. Dabei muss lediglich ein Reibmoment des Drehschiebers, d.h. der Regeleinheit überwunden werden. Im Falle einer Störung, d.h. in einem Fehlerfall, bspw. bei Ausfall der Antriebseinheit, wird die Verbindung zwischen Drehschieber, d.h. zwischen Regeleinheit und Verstelleinheit gelöst, d.h. der Kraftspeicher wird entriegelt. Dabei wird der Kraftspeicher zumindest teilweise entladen, d.h. es wird Energie freigesetzt. Durch die Verbindung zwischen Drehschieber, d.h. zwischen Regeleinheit und Feder, d.h. Kraftspeicher, überträgt sich die frei werdende Energie durch ein auf den Drehschieber einwirkendes Rückstell- bzw. Drehmoment der Feder auf den Drehschieber, d.h. die Regeleinheit. Dadurch fährt der Drehschieber, d.h. die Regeleinheit in eine Sicherheitsstellung, d.h. in der Regel in eine Ausgangslage zurück.

Dabei summieren sich die zu überwindenden Drehmomente nicht auf, sondern teilen sich in Vorspannmoment und Regelmoment auf.

Aufgrund der erfindungsgemäßen Trennung eines unmittelbaren Kontakts von Drehschieber, d.h. Regeleinheit, und Verstelleinheit kann ein selbsthemmender Antrieb, bspw. ein Schneckentrieb zum Einsatz kommen. Dies hat den Vorteil, dass durch die Verstelleinheit definierte Stellungen eingenommen bzw. angefahren werden können, welche sich im Betrieb durch Vibrationen oder im Falle der Anwendung in einem Kühlmittelkreislauf durch sich ändernde Wasserdrücke nicht verändern. Ein Öffnungsgrad des Drehschiebers, d.h. der Regeleinheit ist im Regelbereich demnach nur durch die Verstelleinheit zu beeinflussen. Dabei ist die Fail-Safe-Funktion gewährleistet.

Durch die erfindungsgemäß vorgesehene direkte Verbindung zwischen Drehschieber, d.h. Regeleinheit und Feder, d.h. Kraftspeicher, wirkt in einem Störfall ein deutlich geringerer Impuls auf die jeweiligen Komponenten als in den aus dem Stand der Technik bekannten Lösungsansätzen. Bei einem Entriegeln des Kraftspeichers, d.h. im Falle einer Feder als Kraftspeicher, beim Lösen der Feder, wirkt der Drehschieber, d.h. die Regeleinheit als dämpfendes Element, so dass der Impuls auf die anderen Komponenten vergleichsweise gering ist.

Bei Einsatz des erfindungsgemäßen Drehreglers in einem Kühlmittelkreislauf eines Fahrzeugs kann unter Verwendung eines selbsthemmenden Antriebs der Drehschieber bei abgestelltem Fahrzeug in seine Ausgangslage zurückgefahren werden und die Rückstellfeder muss bei einem Wiederstart des Fahrzeugs nicht wieder neu vorgespannt werden. Die Vorspannung bleibt bestehen. Es muss lediglich eine Verbindung zwischen Drehschieber und Verstelleinheit über die vorgespannte Feder hergestellt werden.

Die vorliegende Erfindung betrifft ferner ein Verfahren zum Betreiben eines elektronisch gesteuerten Reglers mit einer durch eine elektronisch angetriebene Verstelleinheit verstellbaren Regeleinheit, bei dem eine Fail-Safe-Funktion mittels eines ver- und entriegelbaren Kraftspeichers realisiert wird, welcher in einem Normalbetrieb in einem aufgeladenen und verriegelten Zustand einen Wirkkontakt zwischen Verstelleinheit und Regeleinheit herstellt und bei Verstellen der Regeleinheit mit der Regeleinheit mitgeführt wird, und welcher in einem Fehlerfall entriegelt und dadurch zumindest teilweise entladen wird, wodurch die Regeleinheit unabhängig von der Verstelleinheit automatisch in eine Sicherheitsstellung gebracht wird.

In möglicher Ausgestaltung des erfindungsgemäßen Verfahrens wird der Kraftspeicher durch eine Feder, insbesondere eine Spiralfeder ausgeführt.

In weiterer Ausgestaltung wird der Regler als Drehregler mit einem Drehschieber als Regeleinheit gewählt.

Ferner ist es denkbar, dass eine Beaufschlagung der Verstelleinheit und eine Aufladung des Kraftspeichers durch einen Elektromotor umfassenden elektromagnetischen Antrieb erfolgt.

Sowohl das erfindungsgemäße Verfahren als auch der erfindungsgemäße Regler können neben einem Einsatz bei einer Kühlmittelregelung, insbesondere in einem Fahrzeug, auch für andere Anwendungszwecke verwendet werden, wie bspw. bei einem Stellelement mit einer notwendigen Störfallabsicherung sowohl in linearer als auch in rotatorischer Anordnung.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Figuren 1 bis 3 zeigen exemplarisch lineare Ersatzschaubilder für aus dem Stand der Technik bekannte Lösungen zu einem Drehregler, der eine Fail-Safe-Funktion, d.h. ein Einnehmen einer Sicherheitsstellung bei Auftreten einer Störung, aufweist.

In den Figuren 4 und 5 wird das Funktionsprinzip einer Ausführungsform des erfindungsgemäßen Drehreglers bei Durchführung einer Ausführungsform des erfindungsgemäßen Verfahrens in Aufsicht dargestellt.

Figur 6 zeigt das zu den Figuren 4 und 5 zugehörige lineare Ersatzschaubild.

Die Figuren 7 und 8 stellen weitere Ausführungsformen des erfindungsgemäßen Drehreglers als jeweiliges Schnittbild dar.

Die Figuren 9 und 10 zeigen Kennlinien einer Ausführungsform des erfindungsgemäßen Verfahrens, auch im Vergleich mit aus dem Stand der Technik bekannten Verfahren für ein Drehmoment als Funktion eines Verstellwinkels.

Figur 11 zeigt in den Ansichten 11a, 11b und 11c beispielhaft eine mögliche Umsetzung einer Konstruktion für eine Ausführungsform des erfindungsgemäßen Drehreglers, der eine Ausführungsform des erfindungsgemäßen Verfahrens ausführen kann.

Figur 1 zeigt zwei Betriebszustände 101, 102, d.h. eine Ausgangslage 101 und einen Regelfall 102, eines Drehreglers, der einen Drehschieber 122 aufweist, welcher durch einen Antrieb 120 innerhalb eines Verstellbereichs 130 verschoben wird bzw. verschoben werden kann. Eine Fail-Safe-Funktion wird durch eine einfache Rückstellfeder 110,112 umgesetzt. Mit entspannter Rückstellfeder 110 wird die Ausgangslage 101, die auch die Sicherheitsstellung repräsentiert, bei der ein Kühlmitteldurchfluss gewährleistet ist, gebildet. Der Drehschieber 122 gibt den gesamten Verstellbereich 130 frei. Im Regelfall 102 ist der Drehschieber 122 bis zu einer kompletten Verschließung des Verstellbereichs 130 verschoben. Die gespannte Rückstellfeder 112 bringt im Störfall, der beispielsweise durch ein Ausfall des Antriebs 120 verursacht sein könnte, den Drehschieber 122 wieder in die Ausgangslage 101, muss dazu aber ein hohes Kraftmoment aufweisen, da der gesamte Drehregler mit Drehschieber 122 und mit am Drehschieber 122 verzahntem Antrieb 120 bewegt werden muss. Da im Regelfall 102 durch den Antrieb 120 ständig gegen dieses hohe Kraftmoment der Rückstellfeder 112 anzuarbeiten ist, muss ein den Antrieb 120 beaufschlagender Elektromotor sehr groß dimensioniert werden. Außerdem erfordert dies eine dauerhafte Bestromung des Elektromotors.

In Figur 2 wird eine Möglichkeit aufgezeigt, im Störfall den Drehschieber gelöst von seinem Antrieb in die Sicherheitsstellung zu bringen. Ein Antrieb 220 verschiebt den Drehschieber 222 über eine Verstelleinheit 224, die mittels einer verriegelten Kopplung 226 miteinander verbunden sind. In einer Ausgangslage 201 gibt der Drehschieber 222 einen gesamten Verstellbereich 230 frei. Die Rückstellfeder 210 ist dabei im entspannten Zustand. Im Regelfall 202 wird der Drehschieber 222 innerhalb des Verstellbereichs 230 verschoben bis hin zu einer maximal gespannten Rückstellfeder 212. Kommt es zu einem Störfall 203 wird die Kopplung gelöst, wie durch Bezugszeichen 228 kenntlich gemacht, und die am Drehschieber befestigte und sich durch die gelöste Kopplung entspannende Rückstellfeder 214 verschiebt diesen in einen sogenannten "Fail-Safe"-Bereich 232. Da dabei nicht ein Trägheitsmoment und Reibmoment des Antriebs 220 und des ihn beaufschlagenden Elektromotors überwunden werden muss, kann das Kraftmoment der Rückstellfeder geringer als in dem anhand von Figur 1 beschriebenen Verfahren ausgestaltet werden. Jedoch muss auch hier ständig gegen die Rückstellfeder angearbeitet und daher der Elektromotor dauerhaft bestromt werden.

Das in Figur 3 dargestellte Verfahren vermeidet eine dauerhafte Beaufschlagung durch eine Rückstellfeder 310. Bei einem Initialisierungsvorgang 301, 302 wird der Drehschieber 322 durch den Antrieb 320 aus der Ausgangslage 301 um einen Vorspannbereich 332 verschoben. Die zu Anfang entspannte Rückstellfeder 310 wird hierdurch in einen gespannten Zustand 312 versetzt, und in diesem durch einen Verriegelungsvorgang 302 mittels eines herunterklappenden Riegels 340, wie durch gebogenen Pfeil kenntlich gemacht, gehalten. Der Drehschieber 322 kann nun im Regelfall 303 innerhalb des Verstellbereichs 330 ohne Beaufschlagung der durch den eingerasteten Riegel 342 gehaltenen Rückstellfeder 314 verschoben werden. Im Störfall kann die Rückstellfeder 314 entriegelt werden und auf den Drehschieber 322 dergestalt einwirken, dass dieser in die Sicherheitsstellung, die der Ausgangslage 301 entspricht, verschoben wird. Nachteilig bei diesem Verfahren ist, dass beim Auslösen der Rückstellfeder im Störfall ein sehr hoher Rückstellimpuls auf den beaufschlagten Drehschieber 322 samt verbundenem Antrieb 320 einwirkt.

Die Bezugszeichen werden im Folgenden in der Regel auf die jeweilige Figur bezogen. Demnach werden zum Teil auch gleiche Komponenten mit entsprechend unterschiedlichen Bezugszeichen versehen. Im Kontext wird jedoch klar werden, dass die Figurenbeschreibung auch figurenübergreifend zu verstehen ist.

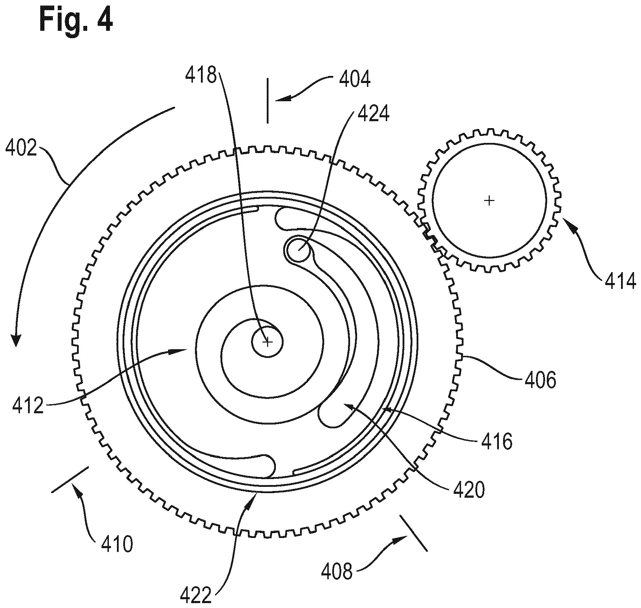

Figur 4 zeigt in Aufsicht schematisch einen Drehregler, der eine Ausführungsform des erfindungsgemäßen Verfahrens realisieren kann. Ein Drehschieber 422 bildet mit einer äußeren Federhalterung 424 einen ersten Verbund "Drehschieber" und ist, in dieser Darstellung nicht sichtbar, an ein Ventil zur Steuerung eines Kühlmitteldurchflusses angeflanscht. Das Ventil ist maximal geöffnet, wenn sich die äußere Federhalterung 424 in einer Stellung 404 befindet, während es verschlossen ist, wenn der Drehschieber 422 im Uhrzeigersinn um einen Winkel von 135 Grad in die Stellung 408 gedreht wird. Zwischen diesen beiden Stellungen 404 und 408 befindet sich der Verstellbereich. Zum Vorspannen einer als Spiralfeder ausgebildeten Rückstellfeder 412, die hier als Kraftspeicher dient, durchläuft ein eine Spule enthaltender Bremsenkörper 406 einen Vorspannbereich 402 zwischen der maximalen Kühlmitteldurchfluss bedeutenden Sicherheitsstellung 404 und einer Verriegelungsstellung 410, in dem er um einen Winkel von ebenfalls 135 Grad entgegen dem Uhrzeigersinn gedreht wird. Beaufschlagt wird der Bremsenkörper 406 durch einen Antrieb 414. Befindet sich der Bremsenkörper 406 in der Verriegelungsstellung 410, wirkt ein elektromagnetisches Feld, das durch eine Bestromung der im Bremsenkörper 406 enthaltenen Spule erzeugt wird, auf den als Bremse ausgebildeten Riegel 416 ein und lenkt diesen dergestalt aus, dass die Bremse mit dem Drehschieber 422 verriegelt ist. Der Bremsenkörper 406, der als Bremse ausgebildete Riegel 416, eine als innere Federhalterung ausgebildete Drehachse 418, sowie eine Öffnung 420 bilden einen zweiten Verbund "Verstelleinheit/Riegel". Durch die Verriegelung beaufschlagt der Antrieb 414 nun den ersten Verbund "Drehschieber" gemeinsam mit dem zweiten Verbund "Verstelleinheit/Riegel". Ein in der Darstellung gewählter Öffnungswinkel von 135 Grad dient lediglich zur Veranschaulichung des erfindungsgemäßen Verfahrens. Generell sind auch andere Öffnungswinkel, wie z.B. 90 Grad oder 180 Grad, denkbar, jedoch gekoppelt an den sich aus den Ventilstellungen zwischen Verschließung und maximaler Öffnung ergebenden Verstellbereich.

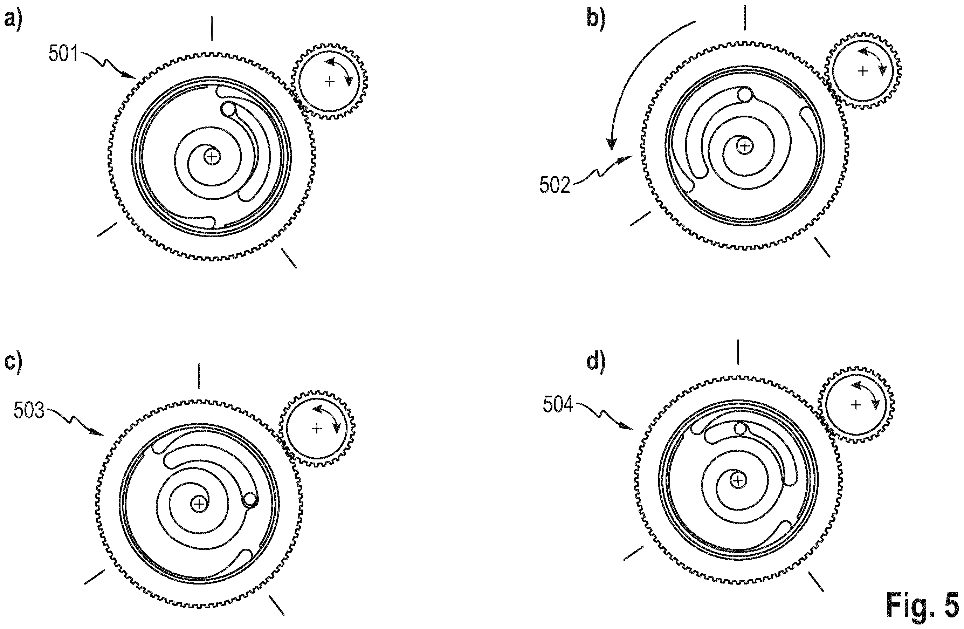

Figur 5 zeigt die verschiedenen Betriebszustände des in Figur 4 dargestellten Drehreglers einzeln auf. In der Ausgangslage 501 ist der erste Verbund "Drehschieber" nicht mit dem zweiten Verbund "Verstelleinheit/Riegel" verriegelt. Die äußere Federhalterung 424 befindet sich an einem linken Anschlagpunkt der Öffnung 420. In Bild 502 wird zum Vorspannen der Rückstellfeder 412 der zweite Verbund "Verstelleinheit/Riegel" durch den Antrieb 414 um 135 Grad entgegen dem Uhrzeigersinn in die Verriegelungsstellung 410 verdreht. Die äußere Federhalterung 424 befindet sich nun an einem rechten Anschlagpunkt der Öffnung 420. Zur Verriegelung wirkt ein elektromagnetisches Feld, das durch Bestromung der im Bremsenkörper 406 enthaltenen Spule erzeugt wird, auf den als Bremse ausgebildeten Riegel 416 ein und lenkt diesen dergestalt aus, dass die Bremse mit dem Drehschieber 422 bündig verriegelt ist. Die beiden miteinander verriegelten Verbünde "Drehschieber" und "Verstelleinheit/Riegel" werden nun gemeinsam von dem Antrieb 414 beaufschlagt. Während des gesamten Regelfalls 503 bleibt das von der Spule erzeugte elektromagnetische Feld, und damit die Verriegelung, bestehen. Die beiden Verbünde werden durch den Antrieb 414 dergestalt beaufschlagt, dass die sich im Verbund "Drehschieber" befindliche äußere Federhalterung zwischen den Stellungen 404, entsprechend einer maximalen Ventilöffnung, und 408, entsprechend einer Ventilschließung, innerhalb des Verstellbereichs befindet. Im Störfall 504 wird die Fail-Safe-Funktion des erfindungsgemäßen Verfahrens ausgelöst. Die Bestromung der das elektromagnetische Feld erzeugenden Spule wird ausgeschaltet, wodurch sich der als Bremse ausgebildete Riegel 416 von dem Drehschieber 422 löst, wodurch sich die beiden Verbünde "Drehschieber" und "Verstelleinheit/Riegel" getrennt voneinander verdrehen können. Da der zweite Verbund "Verstelleinheit/Riegel" von dem im Störfall trägen Antrieb beaufschlagt ist, entlädt sich die vorgespannte Rückstellfeder 412 durch Auslenkung der äußeren Federhalterung 424, wodurch der erste Verbund "Drehschieber", in die Stellung 404, die der maximalen Ventilöffnung entspricht und im Störfall die Sicherheitsstellung darstellt, gebracht wird. Eine durch die Öffnung 420 freigegebene weitere Verschiebung des Verbundes "Drehschieber" entgegen dem Uhrzeigersinn wird durch die Beschränkung des Verstellbereichs ausgeschlossen.

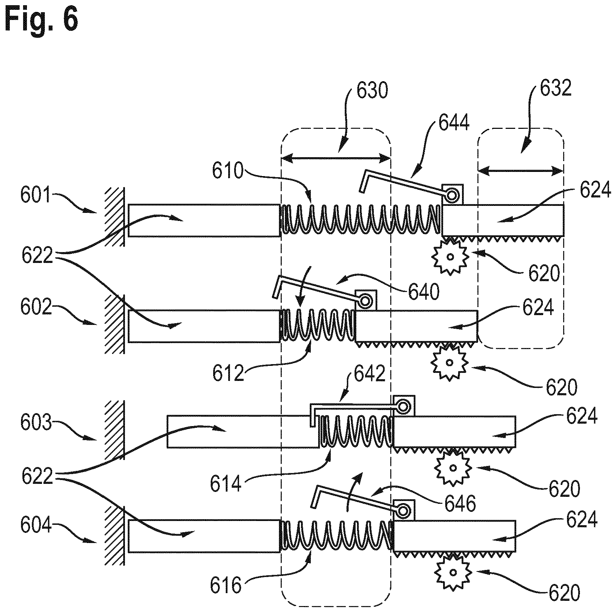

In Figur 6 werden die Betriebszustände aus Figur 5 als lineares Ersatzschaubild dargestellt. In der Ausgangslage 601 gibt der Drehschieber 622 den gesamten Verstellbereich 630 frei, was einem maximalen Kühlmittelfluss entspricht. An einer von einem Antrieb 620 beaufschlagten Verstelleinheit 624 oder auf dem Drehschieber 622 befindet sich ein geöffneter Riegel 644. Drehschieber 622 und Verstelleinheit 624 sind über eine Rückstellfeder 610 miteinander verbunden. Je nach Stellung der Rückstellfeder wird diese im Rahmen von Figur 6 im Folgenden mit den Bezugszeichen 610 (Ausgangslage - entspannter Zustand), 612 (vorgespannter Zustand), 614 (vorgespannter und verriegelter Zustand) und 616 (entriegelter und sich entspannender Zustand) bezeichnet. Zum Vorspannen 602 schiebt der Antrieb 620 innerhalb eines Vorspannbereichs 632 die Verstelleinheit 624 auf den Drehschieber 622 zu und spannt dabei die Rückstellfeder 612. Der Riegel 640 klappt nun herunter und verriegelt den Drehschieber 622 mit der Verstelleinheit 624. Im Regelfall 603 beaufschlagt der Antrieb 620 den Verbund aus Drehschieber 622, gespannter Rückstellfeder 614, verschlossenem Riegel 642 und Verstelleinheit 624 als eine gemeinsame Einheit, und verschiebt diese innerhalb des Verstellbereichs 630. Im Störfall 604 tritt die Fail-Safe-Funktion in Kraft und der Riegel 646 öffnet sich. Durch die Trägheit bzw. einen Endanschlag des mit der Verstelleinheit 620 verzahnten Antriebs entlädt sich die sich entspannende Rückstellfeder 616 an dem Drehschieber 622 und bringt diesen in die Ausgangsstellung zurück, die der Sicherheitsstellung bei maximalem Kühlmittelfluss entspricht.

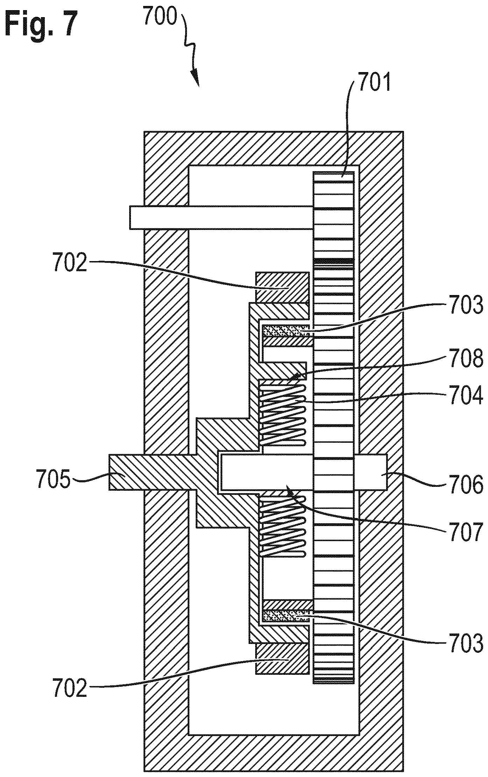

Figur 7 zeigt schematisch ein Schnittbild einer möglichen ersten Konstruktion eines erfindungsgemäßen Drehreglers 700 zur Durchführung einer Ausführungsform des erfindungsgemäßen Verfahrens. Ein Antrieb 701 beaufschlagt den Bremsenkörper 706, der einen als Bremse 703 ausgebildeten Riegel mit sich führt. Außerdem ist an dem Bremsenkörper 706 eine als innere Federhalterung ausgebildete Drehachse 707 vorhanden. An einem Drehschieber 705 befindet sich bei diesem Konstruktionsstand eine Spule 702, deren elektromagnetisches Feld die Bremsen 703 in Kontakt mit dem Drehschieber 705 bringen kann. Weiterhin enthält er eine äußere Federhalterung 708 für eine Rückstellfeder 704, insbesondere eine Spiralfeder oder Schenkelfeder.

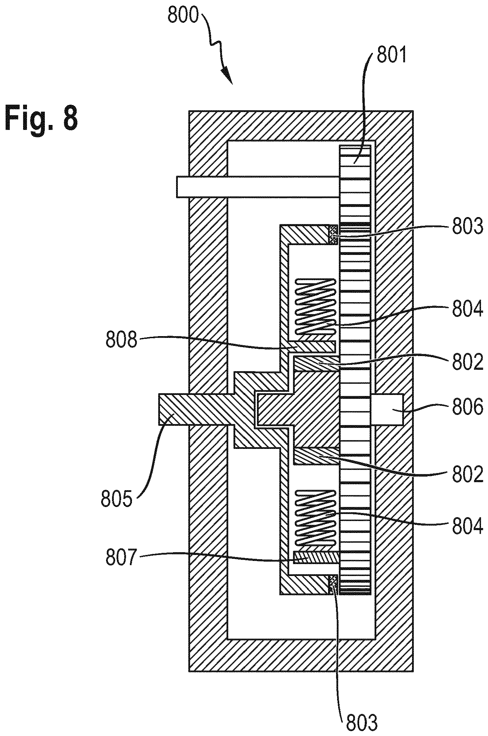

Figur 8 zeigt schematisch ein Schnittbild einer möglichen zweiten Konstruktion eines erfindungsgemäßen Drehreglers 800 zur Durchführung einer Ausführungsform des erfindungsgemäßen Verfahrens. Ein Antrieb 801 beaufschlagt einen Bremsenkörper 806, an dem sich bei diesem Konstruktionsstand eine Spule 802 befindet. Deren elektromagnetisches Feld ist so ausgebildet, dass es auf eine Drehschieber 805 eine anziehende Wirkung mit Richtung auf den Bremsenkörper 806 ausübt. An Kontaktstellen 803 kann sich ein Bremsbelag befinden. Eine Rückstellfeder 804, insbesondere eine Spiralfeder oder Schenkelfeder, ist mit einer Federhalterung 807 am Bremsenkörper und mit einer Federhalterung 808 am Drehschieber verankert.

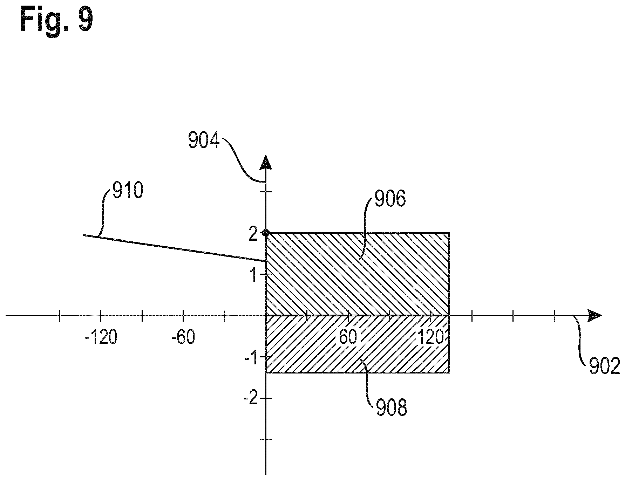

Figur 9 zeigt Bereiche auftretender Drehmomente 904 bei Durchführung einer Ausführungsform des erfindungsgemäßen Verfahrens als Funktion eines Verstellwinkels 902. Auf der Ordinate ist demnach das Drehmoment 904 und auf der Abszisse der Verstellwinkel 902 aufgetragen. Beim Vorspannen im Winkelbereich zwischen 0 und -135 Grad wird eine Federkennlinie 910 einer als Kraftspeicher vorzusehenden Rückstellfeder beschritten. Im Regelfall müssen nur die beim Verdrehen im Winkelbereich zwischen 0 Grad und 135 Grad auftretenden Reibungskräfte der gekoppelten anhand von Figur 4 beschriebenen Verbünde "Drehschieber" und "Verstelleinheit" aufgewendet werden. Bei der Ausführungsform aus Figur 4 umfasst dies einen Bereich 908 bis zu typischerweise 1.4 Nm, gezeigt im negativen Abschnitt der Drehmomentachse 904. Für das Rückstellmoment im Regelbereich 906 wären, also ohne eine Verriegelung der Rückstellfeder gemäß dem erfindungsgemäßen Verfahren, die nach der Federkennlinie bei -135 Grad erreichten 2 Nm aufzubringen, und zwar additiv zu den Reibungskräften 908. Dieses Rückstellmoment tritt beim erfindungsgemäßen Regler im Regelfall nicht auf, sondern wird lediglich im Störfall von der Rückstellfeder aufgebracht, um die Fail-Safe-Funktion zu erfüllen.

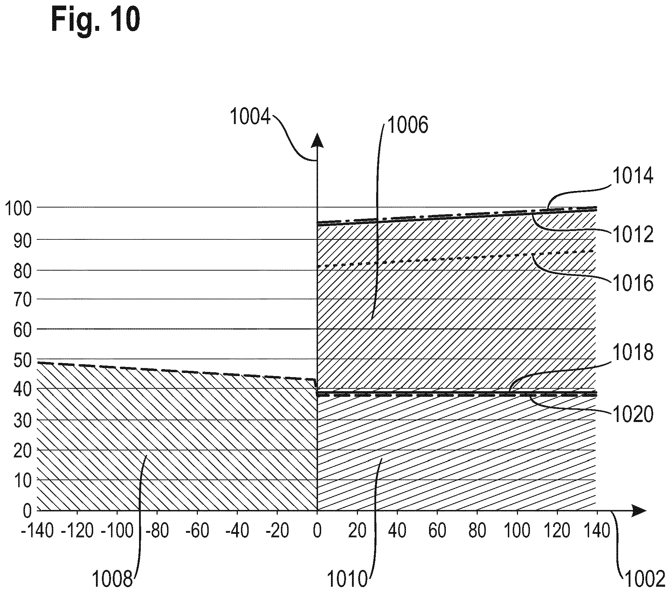

Figur 10 stellt die auftretenden Drehmomente der verschiedenen Konzepte aus den Figuren 1, 2 und 3 dem erfindungsgemäßen Regler gegenüber. Aufgetragen wird nach oben ein auf das höchste auftretende Drehmoment normiertes, sogenanntes nominales Drehmoment 1004 als Funktion des Verstellwinkels in Grad 1002. Ein in dem jeweiligen Konzept eingesetzter Antrieb muss zur Funktionserfüllung mindestens das gezeigte auftretende Drehmoment überwinden. Das bei dem erfindungsgemäßen Regler beim Vorspannen auftretende Drehmoment ist in einem Vorspannbereich 1008 dargestellt. Die im Regelfall bei dem erfindungsgemäßen Regler auftretenden Drehmomente zur Überwindung der Reibungskräfte 1020 bilden den Arbeitsbereich ohne Beaufschlagung der Rückstellfeder 1010, der quantitativ geringere Drehmomente aufweist als der Vorspannbereich 1008. In dem gleichen Bereich 1010 regelt auch das in Figur 3 dargestellte Verfahren 1018, solange die Rückstellfeder verriegelt ist. Allerdings benötigt das Verfahren aus Figur 3 zum Vorspannen der Rückstellfeder ein wesentliches höheres Drehmoment 1014, welches auch dem Verfahren 1012 aus Figur 1 entspricht, bei dem auch im Regelfall gegen dieses hohe Drehmoment angearbeitet werden muss. Daher ergibt sich hier ein Bereich 1006, der zusätzlich zu dem Bereich 1010 ein Drehmoment bildet, das vom Antrieb bereitgestellt werden muss. Quantitativ ein etwas geringeres vom Antrieb zu überwindendes Drehmoment erfordert das Verfahren aus Figur 2, bei dem im Störfall nicht die Trägheits- und Reibungsmomente des Antriebs bzw. der Verstelleinheit zu überwinden sind und daher die Rückstellfeder mit einem geringeren Kraftmoment ausgestaltet ist, gegen das im Regelfall dann ein kleineres Drehmoment 1016 aufgebracht werden muss

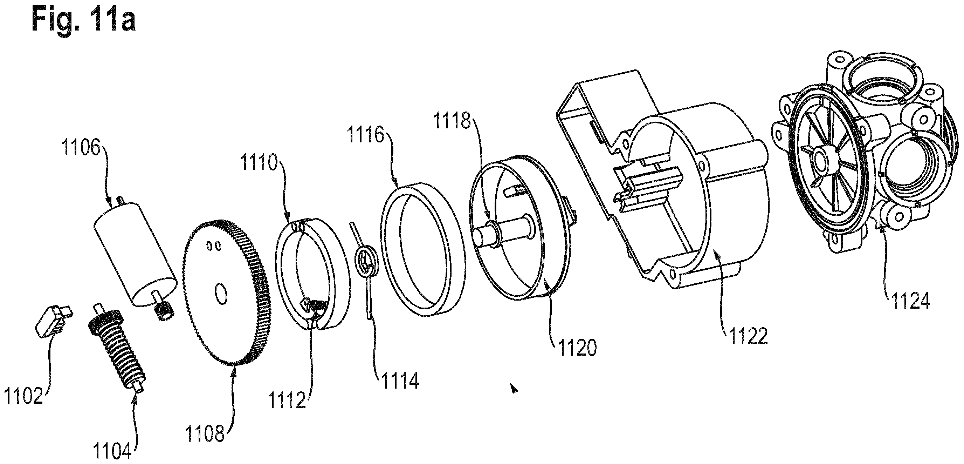

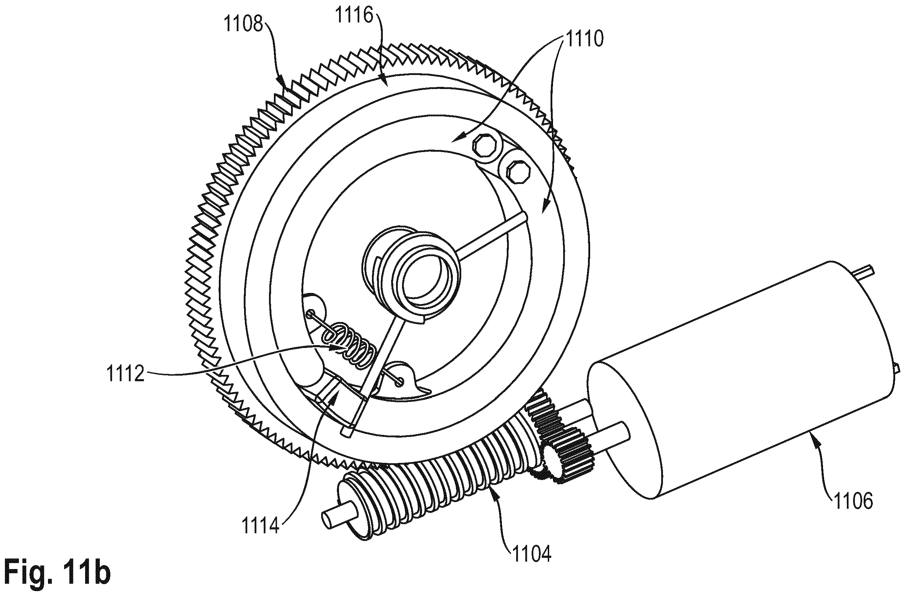

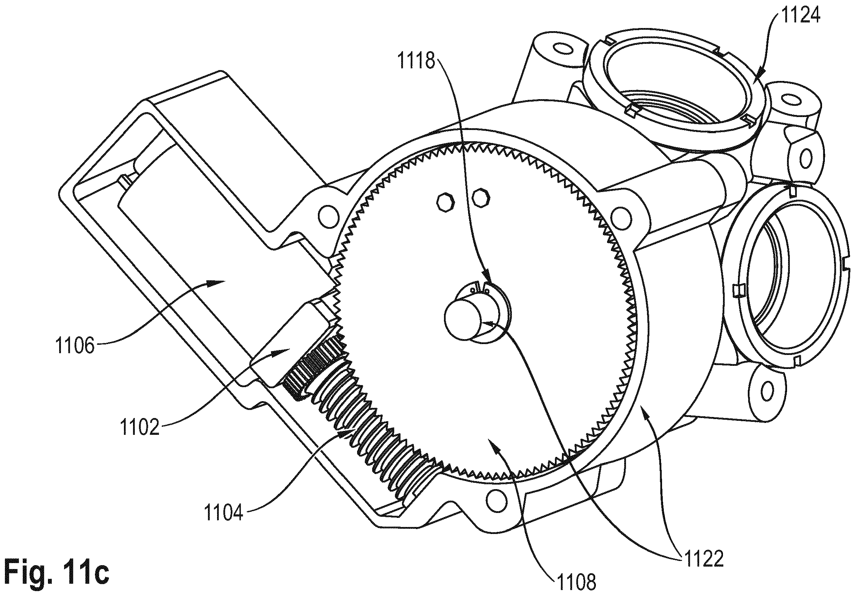

In Figur 11 ist eine mögliche Umsetzung einer Konstruktion für eine Ausführungsform des erfindungsgemäßen Drehreglers, der eine Ausführungsform des erfindungsgemäßen Verfahrens ausführen kann, gezeigt. Figur 11a stellt dies als Explosionszeichnung dar, die einen Schneckenradhalter 1102, ein Schneckenrad 1104, einen Motor 1106, einen Bremsenkörper 1108, Bremsbacken 1110, eine Bremsenfeder 1112, eine Rückstellfeder 1114, einen Magneten 1116, einen Magnetkörper 1120 mit einem Sicherungsring 1118, ein Motorgehäuse 1122 und ein Z-Ventil 1124 umfasst. In teilweisem Zusammenbau zeigt Figur 11b den Antrieb und die Verstelleinheit zusammen mit der Regeleinheit. Eingesetzt in das Motorgehäuse zeigt dies Figur 11c.

## Patentansprüche

1. Regler mit einer Regeleinheit (422, 622), einer Verstelleinheit (624), einer Antriebseinheit (414, 620), die dazu konfiguriert ist, die Verstelleinheit (624) zu verstellen, und einem ver- und entriegelbaren Kraftspeicher (412,610-616), wobei die Regeleinheit (422, 622) und die Verstelleinheit (624) über den Kraftspeicher (412, 610-616) in Kontakt miteinander stehen und die Regeleinheit (422, 622) durch die Verstelleinheit (624) bei verriegeltem, geladenem Kraftspeicher (412, 610-616) unter Mitführung des Kraftspeichers (412, 610-616) innerhalb eines Verstellbereichs (630) verschiebbar ist, wobei bei Entriegelung des geladenen Kraftspeichers (412, 610-616) durch eine dabei zumindest teilweise erfolgende Entladung des Kraftspeichers (412, 610-616) die Regeleinheit (422, 622) unabhängig von der Verstelleinheit (624) automatisch in eine Sicherheitsstellung gebracht wird.

2. Regler nach Anspruch 1, bei dem der Kraftspeicher (412, 610-616) eine Feder, insbesondere eine Spiralfeder ist.

3. Regler nach Anspruch 1 oder 2, der als Drehregler ausgeführt ist, wobei die Regeleinheit (422, 622) als Drehschieber realisiert ist.

4. Regler nach einem der voranstehenden Ansprüche, bei dem die Antriebseinheit (414, 620) ferner dazu konfiguriert ist, den Kraftspeicher (412, 610-616) aufzuladen.

5. Regler nach einem der voranstehenden Ansprüche, bei dem die Antriebseinheit (414, 620) ein selbsthemmender Antrieb, insbesondere ein Schneckentrieb ist.

6. Regler nach einem der voranstehenden Ansprüche, bei dem die Antriebseinheit (414, 620) einen Elektromotor umfasst.

7. Regler nach Anspruch 6, bei dem eine Ver- und Entriegelung des Kraftspeichers (412, 610-616) durch eine elektromagnetische Kopplung zwischen Regeleinheit (422, 622) und Verstelleinheit (624) zu realisieren ist.

8. Regler nach Anspruch 7, bei dem die elektromagnetische Kopplung durch ein elektromagnetisches Feld einer bestromten Spule hervorgerufen wird.

9. Verfahren zum Betreiben eines elektronisch gesteuerten Reglers mit einer durch eine elektronisch angetriebene Verstelleinheit verstellbaren Regeleinheit, bei dem eine Fail-Safe-Funktion mittels eines ver- und entriegelbaren Kraftspeichers realisiert wird, welcher in einem Normalbetrieb in einem aufgeladenen und verriegelten Zustand einen Wirkkontakt zwischen Verstelleinheit und Regeleinheit herstellt und bei Verstellen der Regeleinheit mit der Regeleinheit mitgeführt wird, und welcher in einem Fehlerfall entriegelt und dadurch zumindest teilweise entladen wird, wodurch die Regeleinheit unabhängig von der Verstelleinheit automatisch in eine Sicherheitsstellung gebracht wird.

10. Verfahren nach Anspruch 9, bei dem der Kraftspeicher durch eine Feder, insbesondere eine Spiralfeder ausgeführt wird.

11. Verfahren nach Anspruch 9 oder 10, bei dem der Regler als Drehregler mit einem Drehschieber als Regeleinheit gewählt wird.

12. Verfahren nach einem der Ansprüche 9 bis 11, bei dem eine Beaufschlagung der Verstelleinheit und eine Aufladung des Kraftspeichers durch einen einen Elektromotor umfassenden elektromagnetischen Antrieb erfolgt.

13. Verfahren nach Anspruch 12, bei dem ein selbsthemmender Antrieb, insbesondere ein Schneckentrieb eingesetzt wird.

14. Verfahren nach einem der Ansprüche 9 bis 13, bei dem eine Ver- bzw. Entriegelung des Kraftspeichers durch eine elektromagnetische Kupplung zwischen der Regeleinheit und der Verstelleinheit erfolgt.

15. Ventil, das durch einen Regler nach einem der Ansprüche 1 bis 8 regelbar ist und/oder gemäß einem Verfahren nach einem der Ansprüche 9 bis 14 geregelt wird.

## Claims

1. Regulator having a regulation unit (422, 622), having an adjustment unit (624), having a drive unit (414, 620) which is configured for adjusting the adjustment unit (624), and having a lockable and unlockable force store (412, 610-616), wherein the regulation unit (422, 622) and the adjustment unit (624) are in contact with one another via the force store (412, 610-616), and the regulation unit (422, 622) can, in the case of a locked and charged force store (412, 610-616), be displaced by means of the adjustment unit (624) within an adjustment range (630) so as to concomitantly drive the force store (412, 610-616), wherein, in the event of unlocking of the charged force store (412, 610-616), a discharge of the force store (412, 610-616) which at least partially occurs here causes the regulation unit (422, 622) to be automatically moved into a safety position independently of the adjustment unit (624).

2. Regulator according to Claim 1, in which the force store (412, 610-616) is a spring, in particular a spiral spring.

3. Regulator according to Claim 1 or 2, which is designed as a rotary regulator, wherein the regulation unit (422, 622) is realized as a rotary slide.

4. Regulator according to one of the preceding claims, in which the drive unit (414, 620) is furthermore configured to charge the force store (412, 610-616).

5. Regulator according to one of the preceding claims, in which the drive unit (414, 620) is a self-locking drive, in particular a worm drive.

6. Regulator according to one of the preceding claims, in which the drive unit (414, 620) comprises an electric motor.

7. Regulator according to Claim 6, in which locking and unlocking of the force store (412, 610-616) is realized by means of an electromagnetic coupling between regulation unit (422, 622) and adjustment unit (624).

8. Regulator according to Claim 7, in which the electromagnetic coupling is effected by means of an electromagnetic field of an energized coil.

9. Method for operating an electronically controlled regulator having a regulation unit which is adjustable by means of an electronically driven adjustment unit, in which method a fail-safe function is realized by means of a lockable and unlockable force store which, in normal operation, in a charged and locked state, produces operative contact between adjustment unit and regulation unit and is driven concomitantly with the regulation unit during adjustment of the regulation unit and which, in a fault situation, is unlocked and thereby at least partially discharged, whereby the regulation unit is automatically moved into a safety position independently of the adjustment unit.

10. Method according to Claim 9, in which the force store is formed by a spring, in particular a spiral spring.

11. Method according to Claim 9 or 10, in which the regulator is selected to be a rotary regulator with a rotary slide as regulation unit.

12. Method according to one of Claims 9 to 11, in which exertion of load on the adjustment unit and charging of the force store are realized by means of an electromagnetic drive which comprises an electric motor.

13. Method according to Claim 12, in which a self-locking drive, in particular a worm drive, is used.

14. Method according to one of Claims 9 to 13, in which locking and unlocking of the force store are realized by means of an electromagnetic coupler between the regulation unit and the adjustment unit.

15. Valve which is regulable by means of a regulator according to one of Claims 1 to 8 and/or is regulated in accordance with a method according to one of Claims 9 to 14.

## Revendications

1. Régulateur comprenant une unité de régulation (422, 622), une unité de réglage (624), une unité d'entraînement (414, 620) conçue pour régler l'unité de réglage (624) et un accumulateur d'énergie verrouillable et déverrouillable (412, 610-616), l'unité de régulation (422, 622) et l'unité de réglage (624) étant en contact l'une avec l'autre par le biais de l'accumulateur d'énergie (412, 610-616) et l'unité de régulation (422, 622) pouvant coulisser dans une plage de réglage (630) par le biais de l'unité de réglage (624), lorsque l'accumulateur d'énergie chargé (412, 610-616) est verrouillé, avec entraînement conjoint de l'accumulateur d'énergie (412, 610-616), l'unité de régulation (422, 622) étant automatiquement amenée, lors du déverrouillage de l'accumulateur d'énergie chargé (412, 610-616), dans une position de sécurité indépendamment de l'unité de réglage (624) par déchargement au moins partiel de l'accumulateur d'énergie (412, 610 616).

2. Régulateur selon la revendication 1, l'accumulateur d'énergie (412, 610-616) étant un ressort, en particulier un ressort en spirale.

3. Régulateur selon la revendication 1 ou 2, qui est conçu comme un bouton régulateur rotatif, l'unité de régulation (422, 622) étant réalisée sous la forme d'un coulisseau rotatif.

4. Régulateur selon la revendication 1, l'unité d'entraînement (414, 620) étant en outre conçue pour charger l'accumulateur d'énergie (412, 610-616).

5. Régulateur selon l'une des revendications précédentes, l'unité d'entraînement (414, 620) étant un entraînement autobloquant, en particulier un entraînement à vis sans fin.

6. Régulateur selon l'une des revendications précédentes, l'unité d'entraînement (414, 620) comprenant un moteur électrique.

7. Régulateur selon la revendication 6, un verrouillage et déverrouillage de l'accumulateur d'énergie (412, 610-616) étant réalisés par couplage électromagnétique entre l'unité de régulation (422, 622) et l'unité de réglage (624).

8. Régulateur selon la revendication 7, le couplage électromagnétique étant généré par un champ électromagnétique d'une bobine excitée.

9. Procédé de fonctionnement d'un régulateur à commande électronique à l'aide d'une unité de régulation réglable par une unité de réglage à commande électronique, une fonction à sécurité intégrée étant réalisée à l'aide d'un accumulateur d'énergie verrouillable et déverrouillable qui, en fonctionnement normal dans un état chargé et verrouillé, établit un contact actif entre l'unité de réglage et l'unité de régulation et est entraîné conjointement avec l'unité de réglage lors du réglage de l'unité de régulation et qui est déverrouillée en cas d'erreur et ainsi au moins partiellement déchargé, de sorte que l'unité de régulation est automatiquement amenée dans une position de sécurité indépendamment de l'unité de réglage.

10. Procédé selon la revendication 9, l'accumulateur d'énergie étant réalisé par un ressort, en particulier un ressort en spirale.

11. Procédé selon la revendication 9 ou 10, le régulateur étant choisi sous la forme d'un régulateur rotatif pourvu d'un coulisseau rotatif servant d'unité de régulation.

12. Procédé selon l'une des revendications. 9 à 11, un entraînement électromagnétique muni d'un moteur électrique sollicitant l'unité de réglage et chargeant l'accumulateur d'énergie.

13. Procédé selon la revendication 12, un entraînement autobloquant, en particulier un entraînement à vis sans fin, étant utilisé.

14. Procédé selon l'une des revendications 9 à 13, un verrouillage ou un déverrouillage de l'accumulateur d'énergie étant effectué par un couplage électromagnétique entre l'unité de régulation et l'unité de réglage.

15. Soupape qui peut être régulée par un régulateur selon l'une des revendications 1 à 8 et/ou par un procédé selon l'une des revendications 9 à 14.
